# FASCICULE DE BREVET EUROPEEN

(11) **EP 2 892 810 B1**
(45) Date de publication et mention de la délivrance du brevet: **03.01.2018**
(21) Numéro de dépôt: 13765381.2
(22) Date de dépôt: 06.09.2013
(51) Int. Cl.: B65B 1/06, B01J 8/00, B65G 69/16

(54) **DISPOSITIF DE REMPLISSAGE DE GRANULES, PAR EXEMPLE DE GRANULES DE CATALYSEUR, DANS UN RECIPIENT VERTICAL ALLONGE**
VORRICHTUNG ZUM BEFÜLLEN EINES VERTIKALEN LÄNGLICHEN BEHÄLTERS MIT EINEM GRANULAT, ZUM BEISPIEL EINEM KATALYSATORGRANULAT
DEVICE FOR FILLING A VERTICAL ELONGATE CONTAINER WITH GRANULES, FOR EXAMPLE GRANULES OF CATALYST

(30) Priorité: 07.09.2012 FR 1258411
(43) Date de publication de la demande: 15.07.2015
(73) Titulaire: Crealyst, 72390 Semur En Vallon (FR)
(72) Inventeur: POUSSIN, Bernard, 78420 Carrieres Sur Seine (FR); POUSSIN, Guillaume, 78640 Saint Germain de la Grange (FR); MOURA PEREIRA, Carlos, 78530 Buc (FR)
(74) Mandataire: Vallée-Thiollier, Clémence-Olivia Laure Marie
(86) Numéro de dépôt international: PCT/FR2013/052063
(87) Numéro de publication internationale: WO 2014/037677

(56) Documents cités:
- EP-A1- 0 548 999
- EP-A1- 1 749 568
- WO-A1-2004/096428
- WO-A1-2007/039764
- WO-A1-2011/012875
- FR-A1- 2 273 734
- FR-A1- 2 789 050
- US-A1- 2007 215 236
- "CRITICAL LOADING", NITROGEN AND METHANOL, BRITISH SULPHUR PUBLISHING, LONDON, GB, no. 267, 1 janvier 2004 (2004-01-01), pages 50,52-55, XP001047130, ISSN: 1462-2378

## Description

Dispositif de remplissage de granulés, par exemple de granulés de catalyseur, dans un récipient vertical allongé.

La présente invention concerne un dispositif de remplissage de granulés relativement fragiles dans un récipient, par exemple de granulés de catalyseur dans un réacteur tubulaire allongé, tel qu'un réacteur tubulaire de vaporéformage d'hydrocarbures.

Elle concerne également l'utilisation de ce dispositif dans d'autres domaines industriels que celui de la chimie, par exemple pour le remplissage d'un récipient par des granulés d'absorbant, ou des granulés pour l'alimentation humaine ou animale, ou des gélules ou comprimés de médicaments.

Le remplissage de granulés relativement fragiles dans un récipient vertical allongé présente une difficulté liée à la nécessité d'éviter la fragmentation des granulés du fait d'une hauteur de chute importante.

Pour éviter ce type de problème, il est déjà connu dans l'état de la technique d'installer à l'intérieur du récipient un dispositif comprenant des éléments ralentisseurs de chute, à divers niveaux étagés, pour que les granulés n'acquièrent pas une vitesse excessive et ne se brisent pas lors de l'impact avec les granulés déjà mis en place au fond du récipient.

L'ensemble des éléments ralentisseurs de chute comprend généralement une pluralité d'obstacles, par exemple des éléments tubulaires disposés verticalement de façon étagée, pour éviter une chute directe de chaque grain de catalyseur depuis le haut du réacteur. Les éléments ralentisseurs de chute sont généralement fixés à différentes hauteurs sur un élément vertical allongé, généralement enroulable ou pliable.

Des exemples d'un tel dispositif sont indiqués dans la demande internationale WO 2006/104832 A2, dans la demande internationale WO 2011/012875 A1, dans la demande française FR 2 789 050 A1 et dans la demande française FR 2 273 734 A1.

Un inconvénient de ce type de dispositif réside dans le fait que, lorsque les granulés tombent le long des éléments ralentisseurs de chute, ils ont tendance à changer l'orientation des supports de ces éléments ralentisseurs de chute, si bien qu'il peut arriver qu'une partie au moins des granulés ne rencontre pas d'éléments ralentisseurs de chute, ce qui conduit à la fragmentation d'une partie au moins de ses granulés, du fait d'une hauteur de chute excessive.

L'invention a notamment pour but de réaliser un dispositif de remplissage de granulés ayant une meilleure stabilité de position de l'ensemble formé par les éléments ralentisseurs de chute et leurs supports, limitant les risques d'occurrence de passages préférentiels pour les granulés.

A cet effet, l'invention a pour objet un dispositif selon la revendication 1. L'invention a également pour objet un dispositif selon la revendication 2. L'invention a par ailleurs pour objet l'utilisation de tels dispositifs selon les revendications 6 ou 7. La fixation des éléments de support à un second support vertical augmente leur stabilité vis-à-vis des risques de déviation angulaire par rapport à la verticale, voire de basculement local en cas d'efforts localisés sur certains éléments de support résultant d'une chute de granulés en quantité importante dans le plan, ou à proximité du plan vertical passant par les axes des deux supports verticaux. En particulier, les éléments de support d'un tel dispositif restent complètement stables en cas d'efforts inertiels, même importants, induits par la chute de granulés sur ceux des éléments ralentisseurs de chute qui sont disposés entre les deux supports verticaux.

On comprend que les supports verticaux désignent des éléments allongés ayant de préférence une forme filaire, permettant de répartir les éléments ralentisseurs de chute le long du récipient vertical. Ces supports verticaux sont généralement pliables ou enroulables, afin de faciliter leur manutention. Ils peuvent être de différents types.

Un premier type de support vertical comprend ou est constitué par des tiges rigides disposées bout-à-bout et articulées entre elles à leur jonction, par exemple par un ou plusieurs anneaux d'une chaîne.

Un autre type de support vertical comprend ou est constitué par une chaîne, ou encore par un cordage.

Un troisième type de support vertical comprend au moins un tronçon de câble. De façon préférée, chaque support vertical de ce type comprend essentiellement un câble métallique unique, auquel sont fixés l'ensemble des éléments de support des éléments ralentisseurs de chute. Selon l'invention, les éléments de support des éléments ralentisseurs de chute sont également fixés le long d'un troisième support apte à s'étendre verticalement, dit troisième support vertical, le dispositif étant agencé pour que le premier support vertical, le second support vertical, et le troisième support vertical puissent s'étendre le long de trois axes verticaux parallèles non coplanaires. Ceci procure une grande stabilité aux ralentisseurs de chute vis-à-vis des risques de déviation angulaire ou même de basculement local, du fait de la fixation de ces éléments de support à trois supports verticaux dont les intersections avec un plan horizontal forment un triangle dans ce plan. La stabilité angulaire est en effet accrue dans les trois plans verticaux, sécants deux à deux, joignant deux à deux les axes des éléments de support vertical. En particulier, un tel dispositif reste complètement stable par rapport à un risque de basculement des éléments de support en cas d'efforts inertiels, même importants, exercés, au niveau d'un plan horizontal, dans le triangle formé par les trois points d'intersection entre le plan horizontal et les trois supports verticaux. En d'autres termes, le troisième support vertical permet de maintenir horizontaux les éléments de support des éléments ralentisseurs de chute, les empêchant d'être désorientés au cours du chargement des granulés.

Le troisième support vertical est de préférence similaire aux premier et second supports verticaux.

De façon préférée, les intersections des trois axes verticaux des trois supports verticaux forment un triangle équilatéral. Tous les supports verticaux sont aptes à s'étendre verticalement en vis-à-vis l'un par rapport à l'autre. Ceci favorise la fixation des éléments de support aux différents supports verticaux, ceux-ci n'étant pas décalés verticalement l'un par rapport à l'autre.

De préférence, au moins un élément de support d'éléments ralentisseurs de chute comprend également un élément plan rigide apte à s'étendre horizontalement. Typiquement, tous les éléments de support comprennent un tel élément plan rigide apte à s'étendre horizontalement. Un tel élément de support permet de solidariser les supports verticaux au niveau d'un plan horizontal. Lorsque chacun des supports verticaux est formé par un câble, notamment métallique, qui présente une flexibilité angulaire limitée par rapport à la verticale, la solidarisation de plusieurs, et typiquement de trois câbles à différents niveaux horizontaux étagés, permet en outre de rendre le dispositif de remplissage avec ses supports verticaux globalement moins flexible, et donc d'accroître également sa stabilité verticale et réduire les risques de déviation angulaire par rapport à la verticale du fait d'un impact localisé de granulés sur certains éléments ralentisseurs de chute. Dans un mode de réalisation différent de celui de l'invention, au moins un premier élément ralentisseur de chute est suspendu à un élément de support d'éléments ralentisseurs de chute par un premier support intermédiaire allongé, ce premier support intermédiaire comprenant par exemple un fil métallique ou un câble. En général, tous les éléments ralentisseurs de chute sont alors suspendus à leur élément de support par un tel support intermédiaire allongé, qui peut être linéaire et vertical, ou bien courbe et généralement au moins partiellement flexible. Un support intermédiaire courbe et partiellement flexible peut se déformer lorsqu'une quantité importante de granulés tombe sur un élément ralentisseur de chute qu'il soutient, ce qui limite l'effort inertiel instantané induit.

Le premier support intermédiaire peut notamment comprendre :
- une première partie rigide fixée à l'élément de support, par exemple un premier tronçon de tube ;
- une première partie flexible, interposée entre la première partie rigide et le premier élément ralentisseur de chute, cette première partie flexible comprenant un premier ressort, par exemple spiralé, relié à un premier câble ou à un premier fil.

Le dispositif de ce mode de réalisation, qui est différent de celui de l'invention, peut comprendre également un deuxième élément ralentisseur de chute suspendu à l'élément de support par un deuxième support intermédiaire allongé comprenant:
- une deuxième partie rigide fixée à l'élément de support, par exemple un deuxième tronçon de tube;
- une deuxième partie flexible, interposée entre la deuxième partie rigide, et le deuxième élément ralentisseur de chute, cette deuxième partie flexible comprenant un deuxième ressort, par exemple spiralé, relié à un deuxième câble ou à un deuxième fil ;
la première partie rigide et la deuxième partie rigide formant respectivement un premier et un deuxième tronçons de tube, reliés bout à bout et formant ensemble un tronçon de tube unique cintré.

Ceci permet de fixer à l'élément de support un élément rigide unique (tube cintré) permettant de suspendre à ses deux extrémités des ralentisseurs de chute différents, via deux parties flexibles.

Le dispositif, qui est différent de celui de l'invention, de remplissage de granulés peut comprendre par ailleurs différents types d'éléments ralentisseurs de chute. Il comprend au moins un élément ralentisseur de chute qui appartient au groupe constitué par deux éléments perpendiculaires formant une croix, un élément plan comprenant sur sa périphérie une pluralité de lobes radiaux, et un élément central relié à une pluralité de brins pour former une brosse. On a constaté en effet que ces éléments ralentisseurs de chute présentent une efficacité importante pour constituer des obstacles aux granulés au cours de leur chute.

D'autres types de ralentisseurs de chute se sont également révélés performants, en particulier un ou plusieurs élément(s) ralentisseur(s) de chute fixé(s) directement sur un élément de support, apte(s) à s'étendre sensiblement horizontalement, en s'éloignant de l'élément de support, conformément à l'invention. Un tel élément ralentisseur de chute fixé directement sur un élément de support peut être, dans un mode de réalisation différent de celui de l'invention, une lame métallique sensiblement plane, s'étendant de préférence selon un plan transversal, par exemple une lame en acier à ressort.

Un tel élément ralentisseur de chute fixé directement sur un élément de support peut aussi comprendre un ressort spiralé dont au moins une partie est apte à s'étendre sur la surface d'un tronçon de cône d'axe sensiblement horizontal, la section du tronçon de cône étant croissante en s'éloignant d'un point de fixation de l'élément ralentisseur sur l'élément de support. Selon une variante de réalisation, le ressort spiralé comprend une partie d'extrémité comprenant des spires sensiblement concentriques formant un colimaçon, aptes à s'étendre de façon adjacente à un plan horizontal, la distance moyenne d'un point de cette partie d'extrémité au point de fixation étant supérieure à la distance moyenne à ce point de fixation de la partie du ressort apte à s'étendre sur la surface du tronc de cône.

Les éléments ralentisseurs de chute formés principalement par un ressort spiralé sont en effet très flexibles en eux-mêmes, de sorte qu'il est possible de les fixer directement sur un élément de support sans utiliser de support intermédiaire comprenant une partie flexible.

Ces éléments ralentisseurs de chute du type à ressort spiralé peuvent avantageusement comprendre également un noyau de positionnement du ressort spiralé, s'étendant à l'intérieur du tronçon de cône, de préférence dans une zone de relativement faible section de ce tronçon de cône.

Selon l'invention, les éléments ralentisseurs de chute supportés par chaque élément de support sont des ressorts spiralés (typiquement cylindriques ou coniques), aptes chacun à s'étendre horizontalement sensiblement en un même niveau horizontal dans le récipient et à se répartir ensemble pour chaque élément de support sur un secteur angulaire horizontal déterminé d'angle compris entre 65° et 200°, ce secteur angulaire étant décalé angulairement pour deux éléments de support voisins, de façon qu'ensemble les ressorts spiralés du dispositif se répartissent angulairement sur au moins un secteur angulaire d'angle 360°.

Le fait d'utiliser des ressorts s'étendant selon un secteur angulaire horizontal d'angle d'au moins 65° permet de regrouper plusieurs ressorts à un même niveau horizontal. L'utilisation de secteurs angulaires d'au plus 200° permet d'éviter les risques d'accumulation et de blocage par les granulés, ceux-ci pouvant alors s'écouler dans le secteur angulaire complémentaire d'au moins 160°.

Selon un autre mode de réalisation de l'invention, relativement proche du précédent, chaque élément de support comprend plusieurs niveaux de ressorts spiralés formant des secteurs angulaires : Chaque élément de support comprend une pluralité de bagues reliées entre elles, par exemple au moyen d'un tronçon de tube (de préférence rigide) et/ou un ressort dit vertical (de capacité de charge et de raideur de préférence élevées), apte à s'étendre verticalement, ces bagues étant aptes à être étagées verticalement dans le récipient, chaque bague supportant des éléments ralentisseurs de chute qui sont des ressorts spiralés aptes à s'étendre horizontalement en un même niveau horizontal dans le récipient et à se répartir, pour chaque bague, sur un secteur angulaire horizontal déterminé d'angle compris entre 65° et 200°, qui est décalé angulairement pour deux bagues voisines, de façon qu'ensemble les ressorts spiralés de cet élément de support se répartissent angulairement sur au moins un secteur angulaire d'angle 360°. Selon l'invention, chaque élément de support comprend donc des ressorts s'étendant horizontalement dans sensiblement toutes les directions. Lorsque les bagues, ou certaines d'entre elles sont reliées par un ressort vertical, ceci donne un élément de flexibilité supplémentaire, pour éviter tout bris de granulés.

Typiquement, le récipient présente une hauteur déterminée, les premier, second, et le troisième support vertical sont aptes à s'étendre dans le récipient en vis-à-vis sur la plus grande partie au moins (et typiquement sensiblement la totalité) de la hauteur du récipient, et les éléments de support sont aptes à être étagés verticalement sur la plus grande partie au moins (et typiquement sensiblement la totalité) de la hauteur du récipient. Ainsi, on améliore la stabilité des ralentisseurs de chute sur la plus grande partie ou toute la hauteur du réacteur.
- Chaque élément de support est fixé à chacun des premier, second et troisième support vertical à un même niveau horizontal lorsque ces supports verticaux sont disposés verticalement dans le récipient, ce qui améliore la stabilité des supports verticaux.
- Chaque élément de support supporte une pluralité d'éléments ralentisseurs de chute, ce qui permet une meilleure efficacité de ralentissement pour un niveau donné.

Le dispositif de remplissage de granulés peut être utilisé dans différents domaines industriels, en particulier dans l'industrie chimique, pour réaliser diverses réactions chimiques dans un réacteur tubulaire vertical sensiblement rempli par un catalyseur granulaire. Un tel type de réacteur tubulaire est généralement chauffé par l'extérieur dans un four à radiation. Les réactifs circulent à l'intérieur du réacteur tubulaire, s'écoulant autour des grains de catalyseur, celui-ci pouvant avoir une forme variable et une dimension caractéristique (par exemple une longueur) souvent comprise entre 2 mm et 25 mm (millimètres). Les catalyseurs sont souvent déposés sur un support, relativement fragile, par exemple de l'alumine.

Ce type de réacteur est notamment utilisé dans le procédé de vaporéformage d'hydrocarbures (par exemple de méthane, gaz naturel, ou naphta), sur un catalyseur généralement à base de nickel sur un support inerte, par exemple comprenant de l'alumine. Les réactifs circulent à l'intérieur de réacteurs tubulaires verticaux remplis de catalyseur, chaque tube ayant par exemple une longueur de plusieurs mètres, et un diamètre intérieur souvent compris entre 8 cm et 18 cm (centimètres).

Le remplissage du catalyseur à l'intérieur d'un tel tube est relativement délicat. Il est souhaitable en effet d'éviter une chute brutale des grains de catalyseur, relativement fragiles et onéreux à partir d'une hauteur élevée, pour éviter de casser une partie notable des grains de catalyseur ce qui conduirait à un bouchage partiel ou total du lit catalytique, et/ou à une augmentation des pertes de charges du réacteur.

Ainsi, le dispositif décrit précédemment permet avantageusement de remplir de catalyseur des réacteurs tubulaires, en particulier des réacteurs tubulaires de très grande longueur, par exemple comprise entre 10 et 16 m, pour un diamètre intérieur variable, par exemple compris entre 8 et 18 centimètres, et ce avec des risques très réduits de casse d'une partie notable du catalyseur.

Il peut être utilisé pour tous types de réacteurs tubulaires, notamment pour un réacteur tubulaire de vaporéformage d'hydrocarbures.

On peut également utiliser le dispositif précité pour le remplissage de granulés qui sont des grains de catalyseur, dans un récipient qui est un réacteur chimique tubulaire, par exemple un réacteur tubulaire pour le vaporéformage d'hydrocarbures. L'utilisation du dispositif précité n'est toutefois pas restreinte à l'industrie chimique. Elle peut être utilisée notamment dans l'industrie agroalimentaire, notamment pour le remplissage de granulés pour l'alimentation humaine ou animale dans des récipients verticaux.

L'invention concerne également d'autres domaines industriels, et notamment l'utilisation d'un dispositif pour le remplissage de granulés qui sont des gélules ou des comprimés d'un médicament dans un récipient.

L'invention sera mieux comprise à la lecture de la description qui va suivre, donnée uniquement à titre d'exemple et faite en se référant aux dessins dans lesquels :
- la figure 1 est une vue en coupe verticale schématique d'une partie d'un dispositif de remplissage de grains de catalyseur selon un mode de réalisation, disposé à l'intérieur d'un réacteur tubulaire de vaporéformage d'hydrocarbures ;
- la figure 2 est une vue en coupe schématique selon un plan horizontal du dispositif de la figure 1 disposé à l'intérieur du réacteur tubulaire de vaporéformage ;
- chacune des figures 3 et 4 est une vue en coupe schématique d'un plan horizontal d'un dispositif selon un mode de réalisation comprenant des éléments ralentisseurs de chute d'un type différent de celui des éléments ralentisseurs de chute du dispositif des figures 1 et 2 ;
- la figure 5 est une vue en coupe verticale schématique d'une partie d'un dispositif selon un mode de réalisation comprenant des éléments intermédiaires de support des éléments ralentisseurs de chute, de forme courbe; et
- la figure 6 est une vue en coupe verticale schématique d'un récipient vertical muni du dispositif de remplissage de la figure 1.
- la figure 7 est une vue transversale partielle d'une partie d'un dispositif selon un mode de réalisation comprenant des éléments intermédiaires de support des éléments ralentisseurs de chute différents de ceux de la figure 5.
- la figure 8 est une vue de dessus d'une partie d'un dispositif selon le mode de réalisation de la figure 7.
- la figure 9 est une vue en perspective d'une partie d'un dispositif comprenant des ralentisseurs de chute du type à ressorts spiralés.
- la figure 10 est une vue en coupe dans un plan vertical de ralentisseurs de chute du type à ressorts spiralés.
- la figure 11 est une vue de dessus de ralentisseurs de chute du type à ressorts spiralés, différents de ceux de la figure 10.
- la figure 12 est une vue en perspective d'une partie d'un dispositif selon l'invention comprenant un ralentisseur de chute du type à lame.
- La figure 13 est une vue en perspective d'une partie d'un autre dispositif selon l'invention comprenant des ralentisseurs de chute du type à ressorts spiralés disposés en secteurs. Elle permet également de décrire des variantes de ce dispositif selon l'invention, de structure relativement similaire.

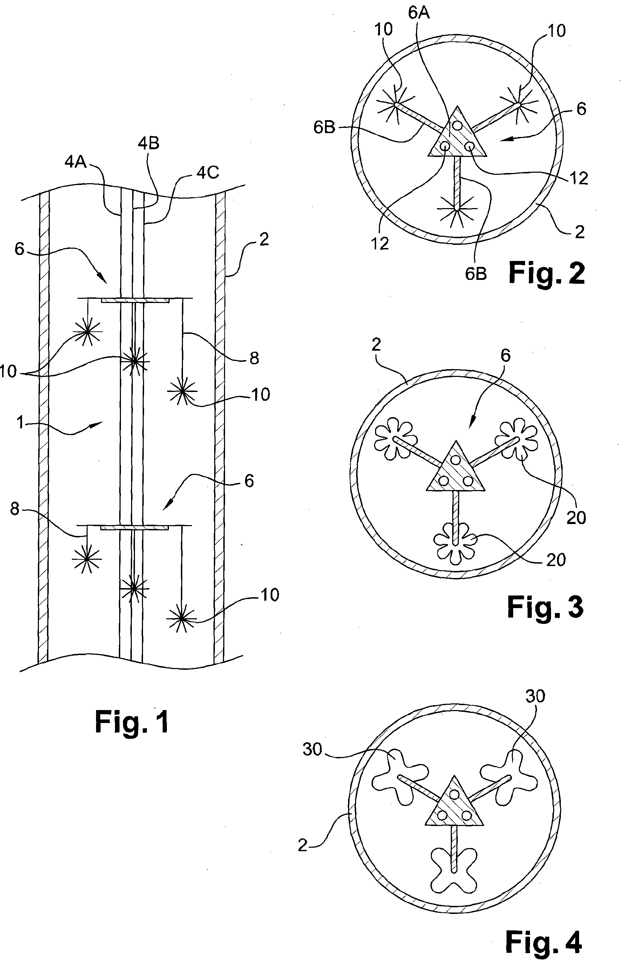

On a représenté sur la figure 1 un dispositif 1 de remplissage de granulés selon un mode de réalisation. Dans cet exemple, le dispositif 1 permet de remplir des grains de catalyseur de vaporéformage d'hydrocarbures. Le dispositif 1 est disposé à l'intérieur d'un récipient vertical allongé 2, qui est un réacteur tubulaire de vaporéformage d'hydrocarbures. Ce dispositif 1 comprend trois supports verticaux, soit un premier support vertical 4_{A}, un second support vertical 4_{B}, un troisième support vertical 4_{C}. Ces trois supports verticaux sont constitués dans cet exemple par trois câbles métalliques qui s'étendent verticalement à l'intérieur du réacteur tubulaire, suivant trois axes verticaux non coplanaires. Ils sont reliés entre eux par des éléments de support 6 d'éléments ralentisseurs de chute 10, ces éléments de support 6 étant étagés verticalement.

Chacun des éléments ralentisseurs de chute 10 comprend, dans cet exemple, un élément central relié à une pluralité de brins pour former une brosse. Chaque élément ralentisseur de chute 10 est suspendu à un élément de support 6 d'éléments ralentisseurs de chute par un support intermédiaire allongé 8 formé par un fil métallique rectiligne et vertical.

On se réfère maintenant la figure 2, qui représente en coupe horizontale le dispositif de la figure 1, à l'intérieur du réacteur tubulaire. L'élément de support 6 d'éléments ralentisseurs de chute 10 comprend une partie plane rigide 6_{A}, comprenant trois orifices 12 pour le passage des éléments de support verticaux 4_{A}, 4_{B}, 4_{C}, et trois éléments rigides radiaux 6_{B} fixés sur la partie plane rigide 6_{A}.

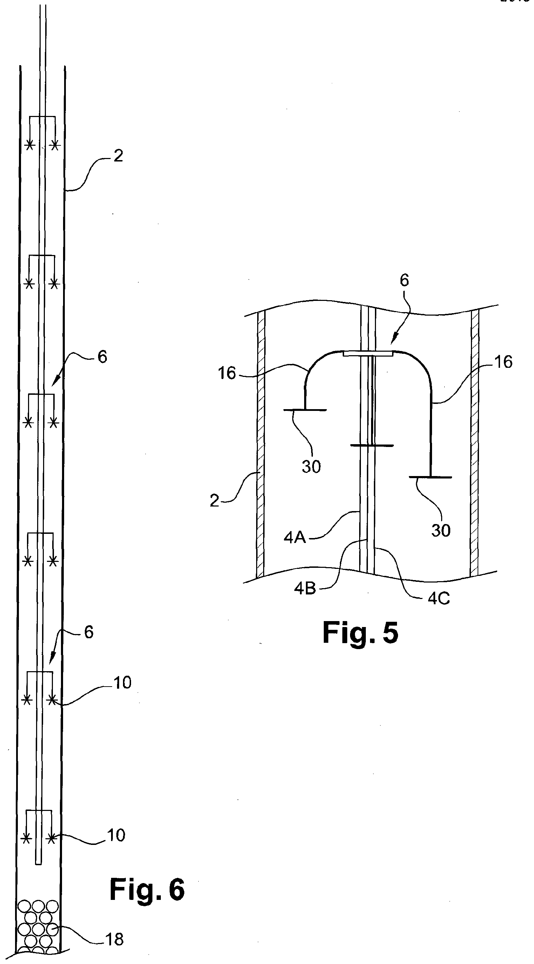

On a représenté sur la figure 2 uniquement un élément 6 de support de ralentisseurs de chute 10, et les ralentisseurs de chute 10 qui sont suspendus à cet élément. Comme le montre la figure 1, et ci-après la figure 6, le dispositif 1 comprend en fait une pluralité d'éléments de support 6 typiquement étagés verticalement. De façon préférée, on oriente alors différemment à chaque étage la position, notamment angulaire, des éléments ralentisseurs de chute, de façon à ce que sensiblement la totalité des grains de catalyseur rencontre au moins un élément ralentisseur de chute au cours de sa chute verticale. On peut par exemple décaler, d'un étage à l'autre, de 15° à 20° d'angle, dans un plan horizontal la position des éléments rigides radiaux 6_{B}. Avantageusement, on décale aussi la distance moyenne des ralentisseurs de chute de l'axe médian du dispositif (par exemple de l'axe vertical passant par le barycentre des points d'intersection des axes des trois supports verticaux avec un plan horizontal). De façon très préférée, on installe un grand nombre d'éléments de support 6 étagés verticalement, comprenant chacun une pluralité d'éléments ralentisseurs de chute 10, disposés à des positions radiales et angulaires différentes, de telle sorte que la quasi-totalité des grains de catalyseur rencontre plusieurs éléments ralentisseurs de chute au cours de leur chute verticale.

Les points de fixation mécanique des éléments de support 6 sur les différents supports verticaux peuvent être non modifiables, et par exemple réalisés par soudage. Toutefois, le dispositif peut comprendre avantageusement des moyens de réglage de la position verticale d'un ou de plusieurs éléments de support. Ceci permet alors d'ajuster la position verticale des éléments de support à la géométrie du réacteur tubulaire, et notamment à sa longueur. On peut notamment utiliser des moyens mécaniques démontables bien connus, tels que vis, boulons, colliers de serrage, etc. pour fixer un élément de support 6 à un support vertical déterminé.

Les orifices 12 pour le passage des éléments de support verticaux 4_{A}, 4_{B}, 4_{C}, peuvent optionnellement être notablement plus éloignés les uns des autres, que selon leur représentation sur la figure 2. La distance entre deux supports verticaux peut même dépasser 30% ou même 50% du diamètre intérieur du récipient 2 (réacteur tubulaire), tout en restant en général inférieure à 85% de ce diamètre. Ceci accroît alors encore la stabilité des supports des ralentisseurs de chute, retenus par des points éloignés. Cependant, dans un tel cas, l'enroulement du dispositif pour son transport est rendu plus complexe. En outre, il faut de préférence réaliser un évidement central de la partie plane rigide 6_{A}, pour éviter qu'elle ne constitue une surface horizontale trop importante, susceptible de gêner la chute du catalyseur.

La figure 3 représente, également en coupe horizontale, un dispositif disposé à l'intérieur d'un réacteur tubulaire de vaporéformage, ce dispositif comprenant des éléments ralentisseurs de chute différents de ceux représentés sur les figures 1 et 2, formés dans ce cas par des éléments typiquement plans 20, chacun comprenant sur sa périphérie une pluralité de lobes radiaux.

De façon analogue, la figure 4 représente, également en coupe horizontale, un dispositif disposé à l'intérieur d'un réacteur tubulaire de vaporéformage, ce dispositif comprenant des éléments ralentisseurs de chute différents de ceux représentés sur les figures 1, 2, et 3, chaque élément ralentisseur de chute 30 étant constitué par deux éléments perpendiculaires formant une croix, typiquement disposés dans un plan.

La figure 5 représente en coupe verticale une partie d'un dispositif tel que celui représenté à la figure 4. Chaque élément ralentisseur de chute 30, formé par un élément plan en croix, est suspendu à l'élément support 6 de ralentisseurs de chute par un support intermédiaire allongé 16 formé par un élément courbe, semi-rigide, dont présentant une certaine flexibilité. Cette flexibilité réduit l'effort inertiel momentané exercé sur l'élément de support 6 lorsqu'une quantité notable de catalyseur tombe à un instant donné sur l'un des éléments ralentisseurs de chute 30.

On se réfère maintenant la figure 6, qui représente en coupe verticale un réacteur tubulaire vertical de vaporéformage, de très grande longueur, par exemple de 10 à 16 m. On a représenté, pour rendre la figure plus visible, six éléments de support 6 fixés aux différents éléments de support verticaux, non différenciés sur cette figure. Le dispositif de remplissage 1 peut comprendre en fait un nombre notablement plus grand d'éléments de supports verticaux, par exemple compris entre 10 et 20, chacun de ces éléments pouvant soutenir typiquement de deux à dix éléments ralentisseurs de chute 10. On a représenté également, dans le fond du réacteur tubulaire, une masse 18 de grains de catalyseur déjà introduits dans le réacteur tubulaire.

On utilise le dispositif de remplissage de la façon suivante : on introduit progressivement, par la partie supérieure du réacteur tubulaire, un flux de grains de catalyseur. On fait en sorte que l'extrémité inférieure du dispositif soit au-dessus de la surface de la masse 18 de catalyseur déjà introduit dans le réacteur tubulaire, en relevant par étapes le dispositif, par rapport au réacteur tubulaire, au fur et à mesure du remplissage du réacteur tubulaire par le catalyseur. Ceci peut être fait par exemple grâce à des moyens visuels disposés à l'extrémité inférieure du dispositif, moyens non représentés sur la figure 6. En procédant de cette façon, on évite qu'un enfouissement d'une partie des ralentisseurs de chute par le catalyseur en fond de réacteur ne risque de bloquer le dispositif à l'intérieur de ce réacteur tubulaire.

Les grains de catalyseur, qui tombent en pluie, mais également parfois sous forme de paquets plus compacts, impactent au cours de leur chute différents ralentisseurs de chute, ce qui les dévie, ralentit, et disperse dans un plan horizontal. Ainsi, la quasi-totalité des grains de catalyseur peut être introduite dans le réacteur tubulaire vertical, afin de réaliser son remplissage, sans que ceux-ci n'acquièrent une vitesse de chute finale trop importante générant la fragmentation d'une partie notable de ces grains.

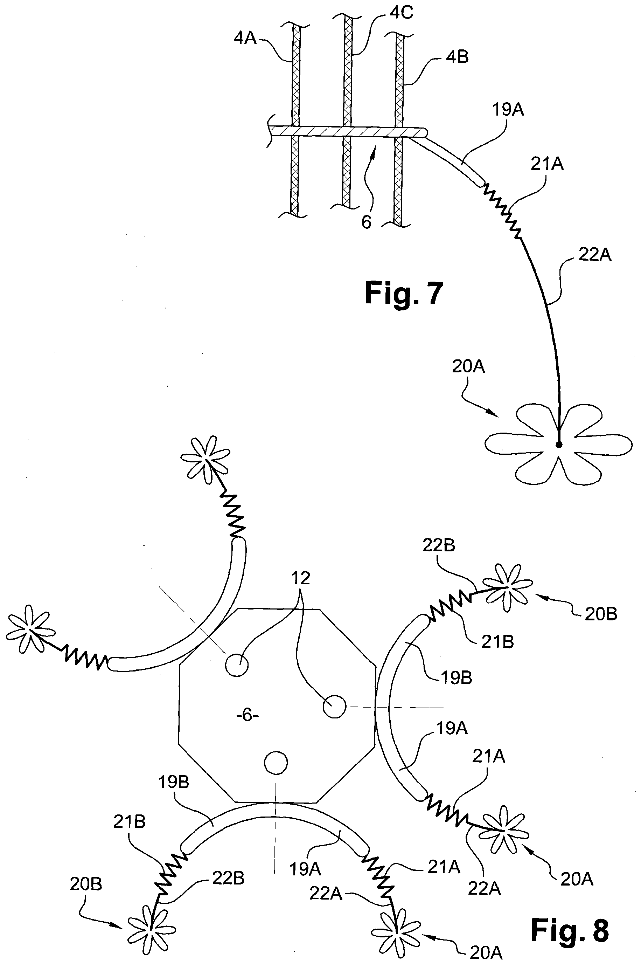

On se réfère maintenant à la figure 7, qui représente en vue frontale un premier support intermédiaire d'un ralentisseur de chute 20_{A}, comprenant une première partie rigide 19_{A} formée par un premier tronçon de tube soudé à l'élément de support 6, ainsi qu'un premier ressort spiralé 21_{A}, et un premier câble 22_{A}.

Le premier ressort 21_{A} et le premier câble 22_{A} forment une première partie flexible, interposée entre la première partie rigide 19_{A} et le premier élément ralentisseur de chute 20_{A}.

On se réfère maintenant à la figure 8, qui représente une vue de dessus d'un élément de support 6 et de six supports intermédiaires d'un ralentisseur de chute fixés sur cet élément ralentisseur de chute 6, ces supports intermédiaires étant du type de celui représenté latéralement sur la figure 7.

A chaque première partie rigide 19_{A} formée par un premier tronçon de tube est associée une deuxième partie rigide 19_{B} fixée à l'élément de support 6, formée par un deuxième tronçon de tube. Une deuxième partie flexible est interposée entre la deuxième partie rigide 19_{B} et un deuxième élément ralentisseur de chute 20_{B}, cette deuxième partie flexible comprenant un deuxième ressort spiralé 21_{B}, relié à un deuxième câble 22_{B}.

La première partie rigide 19_{A} et la deuxième partie rigide 19_{B}, constituées par respectivement le premier et le deuxième tronçon de tube, forment ensemble un tronçon de tube unique cintré, ce qui simplifie la fixation à l'élément de support 6.

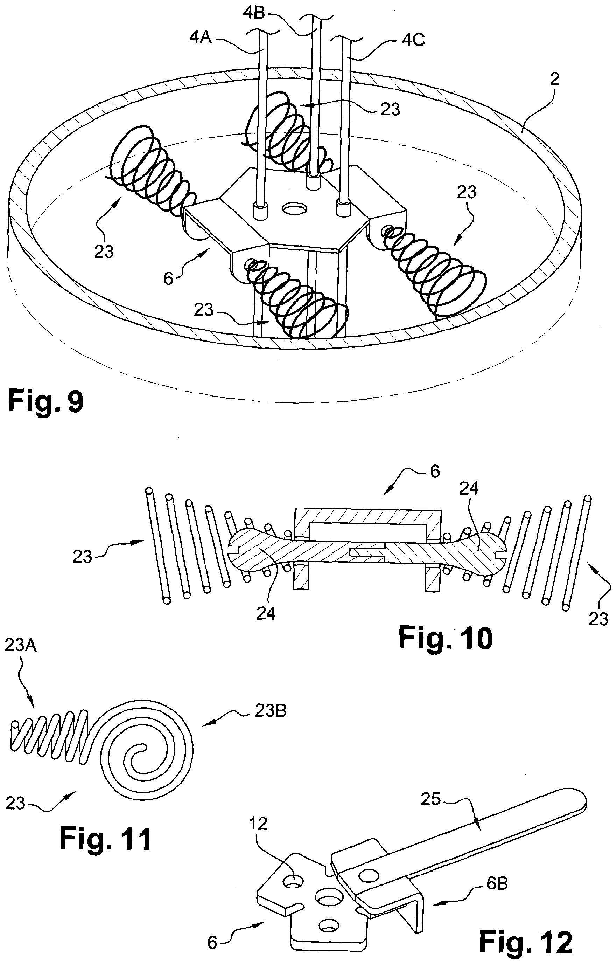

On se réfère maintenant à la figure 9, qui représente en perspective un élément de support 6 sur lequel sont directement fixés quatre éléments ralentisseurs de chute comprenant chacun un ressort spiralé 23.

Le ressort 23 s'étend sur la surface d'un tronçon de cône d'axe sensiblement horizontal, la section du tronçon de cône étant croissante en s'éloignant du point de fixation de l'élément ralentisseur sur l'élément de support 6, ce point de fixation correspondant à un orifice de passage, non référencé, dans une partie en équerre de l'élément de support 6.

Sur la figure 10 sont représentés en coupe deux ressorts spiralés 23, disposés chacun autour d'un noyau de positionnement 24. Chacun des deux noyaux de positionnement 24 s'étend à l'intérieur d'un tronçon de cône associé à un ressort 23, dans une zone de relativement faible section de ce tronçon de cône, correspondant à des spires de faible diamètre moyen.

On a représenté sur la figure 11 un autre type de ressort spiralé 23, comprenant une première partie 23_{A} de même type que le ressort décrit à la figure 9 (ressort spiralé s'étendant le long d'un cône d'axe horizontal), et une deuxième partie d'extrémité 23_{B} comprenant des spires sensiblement concentriques formant un colimaçon s'étendant de façon adjacente à un plan horizontal. La distance moyenne d'un point de cette partie d'extrémité 23_{B} au point de fixation est supérieure à la distance moyenne à ce point de fixation de la partie 23_{A} du ressort s'étendant sur la surface du tronc de cône.

Les différents dispositifs spiralés représentés sur les figures 9, 10, et 11 présentent une spire de dimension maximale dans une zone relativement périphérique, éloignée du point de fixation du ralentisseur de chute comprenant ce ressort, de sorte que la surface de réception des grains de catalyseur est relativement plus grande vers la périphérie du récipient, et que la partie centrale du récipient n'est pas trop encombrée, et comprend des zones de passage pour les grains de catalyseur.

On se réfère maintenant à la figure 12, qui représente notamment un élément de support 6 comprenant une partie en équerre 6_{B} sur laquelle est disposé un élément ralentisseur de chute 25 du type à lame métallique plane, par exemple une lame en acier à ressort. Les moyens de fixation de cette lame sur l'élément de support (par exemple un boulon) ne sont pas représentés. Le choix d'un acier à ressort permet d'augmenter la flexibilité de cette lame, ce qui réduit l'intensité des chocs lors de l'impact des grains de catalyseur.

Les éléments de support selon cet exemple ne sont, de préférence, pas répartis de façon régulière le long des supports verticaux. On peut par exemple mettre en oeuvre des groupes d'éléments de support, chaque groupe comprenant par exemple trois ou quatre éléments de support dans un espace vertical de 10 cm à 25 cm (centimètres), séparé du groupe adjacent par un espace sans élément de support de 60 cm à un mètre.

Pour un même groupe d'éléments de support, on réalise avantageusement un décalage angulaire des éléments de support, de façon à disposer les éléments ralentisseurs de chute dans le plus grand nombre de directions. On peut par exemple utiliser trois éléments de support décalés de 120°, ou quatre éléments de support décalés de 90°. Chaque élément de support peut, par exemple, supporter un ralentisseur de chute formé par une lame, comme représenté sur la figure 12, décalée de 120° ou 90° par rapport à la lame la plus proche.

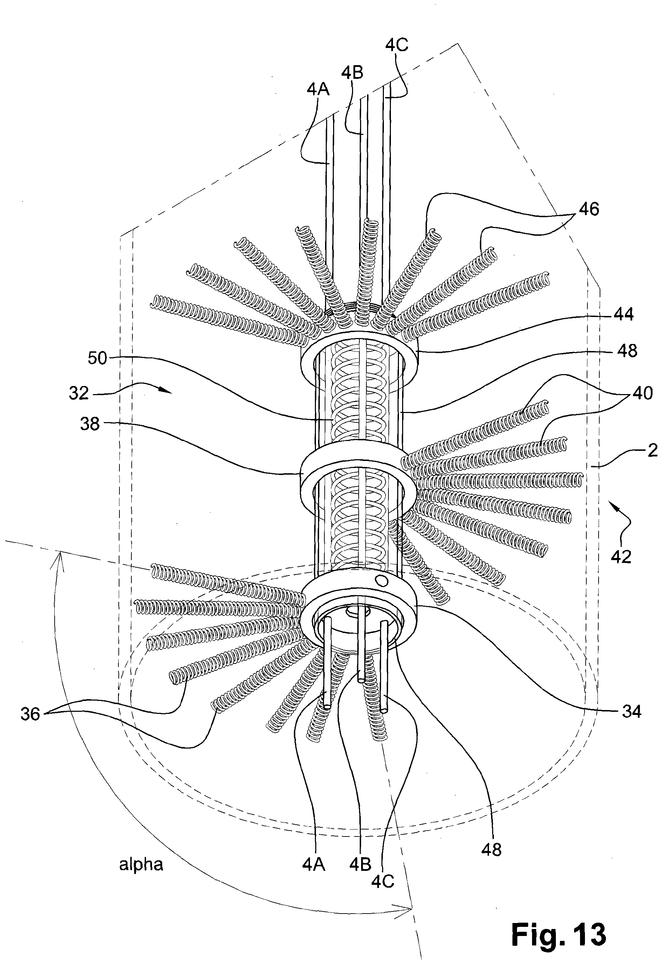

On se réfère maintenant à la figure 13, qui représente en perspective une partie d'un autre dispositif selon l'invention comprenant des ralentisseurs de chute du type à ressorts spiralés disposés en secteurs décalés de 120°.

Dans ce dispositif, chaque élément de support 42 comprend trois bagues 34, 38, et 44 reliées entre elles par exemple un tronçon 48 de tube rigide, lui-même relié aux trois supports verticaux 4A, 4B, et 4C.

Ces bagues 34, 38, 44 sont aptes à être étagées verticalement dans le récipient 2, chaque bague supportant des éléments ralentisseurs de chute qui sont des ressorts spiralés 36, 40, 46 aptes à s'étendre horizontalement en un même niveau horizontal dans le récipient 2.

Ces ressorts spiralés 36, 40, 46 se répartissent, pour chaque bague 34, 38, 44, sur un secteur angulaire horizontal déterminé d'angle (alpha pour la bague 34) compris entre 65° et 200°, qui est décalé angulairement pour deux bagues voisines, de façon qu'ensemble les ressorts spiralés 36, 40, 46 de cet élément de support 42 se répartissent angulairement sur au moins un secteur angulaire d'angle 360°.

Le ressort vertical 50 permet de maintenir l'espacement entre les trois supports verticaux 4A, 4B, et 4C. La bague 34 peut être disposée aussi bien en partie basse qu'en partie haute du dispositif.

Selon une variante, il n'y a plus de tronçon 48 de tube rigide, et seule l'une des bagues 34 est fixée directement sur les trois supports verticaux 4A, 4B, et 4C. Les deux autres bagues sont alors fixées sur le ressort vertical 50 (de forte raideur et capacité de charge élevée, directement ou via des moyens intermédiaires. Les trois bagues sont alors reliées entre elles par le ressort vertical 50, ce qui fournit un élément de flexibilité supplémentaire pour éviter le bris de granulés.

Enfin, selon une autre variante, il n'y a plus de tronçon 48 de tube rigide ni de ressort vertical 50, et chacune des bagues 34, 38, 44 est un élément de support fixé sur les trois supports verticaux 4A, 4B, et 4C, et supporte des ressorts spiralés 36, 40, 46 s'étendant sur un secteur angulaire d'environ 120°.

Dans tous les cas, trois bagues successives permettent de disposer des ressorts spiralés selon sensiblement toutes les directions, afin de ralentir la plupart des granulés qui sont envoyés dans le récipient.

L'invention telle que décrite dans les revendications 1 à 7 n'est pas restreinte aux modes de réalisation décrits précédemment, ni à leur utilisation pour le remplissage de catalyseur dans un réacteur tubulaire. On pourra en outre également utiliser, conjointement aux éléments de cette invention, tous les éléments connus adéquats de l'état de la technique.

## Revendications

1. Dispositif (1) de remplissage de granulés dans un récipient vertical allongé (2) comprenant des éléments (23) ralentisseurs de chute des granulés, destinés à être répartis verticalement à l'intérieur du récipient (2) au moyen d'éléments de support (6) de ces éléments ralentisseurs de chute (23) fixés le long d'un premier support apte à s'étendre verticalement dans le récipient vertical allongé (2), dit premier support vertical (4A), les éléments de support (6) étant également fixés le long d'un second support apte à s'étendre verticalement dans le récipient vertical allongé (2), dit second support vertical (4B), les éléments ralentisseurs de chute (23) supportés par chaque élément de support (6) étant des ressorts spiralés, aptes chacun à s'étendre horizontalement sensiblement en un même niveau horizontal dans le récipient (2), **caractérisé en ce que** les éléments de support (6) soient également fixés le long d'un troisième support apte à s'étendre verticalement dans le récipient vertical allongé (2), dit troisième support vertical (4C), le dispositif (1) est agencé pour que le premier support vertical (4A), le second support vertical (4B), et le troisième support vertical (4C) puissent s'étendre le long de trois axes verticaux parallèles non coplanaires, les éléments ralentisseurs de chute (23) supportés par chaque élément de support (6) étant aptes chacun à se répartir ensemble, pour chaque élément de support (6), sur un secteur angulaire horizontal déterminé d'angle (alpha) compris entre 65° et 200°, ce secteur angulaire étant décalé angulairement pour deux éléments de support voisins, de façon qu'ensemble les ressorts spiralés (23) du dispositif (1) se répartissent angulairement sur au moins un secteur angulaire d'angle 360°.

2. Dispositif (1) de remplissage de granulés dans un récipient vertical allongé (2) comprenant des éléments (36, 40, 46) ralentisseurs de chute des granulés, destinés à être répartis verticalement à l'intérieur du récipient (2) au moyen d'éléments de support (42) de ces éléments ralentisseurs de chute (36, 40, 46) fixés le long d'un premier support apte à s'étendre verticalement dans le récipient vertical allongé (2), dit premier support vertical (4A), les éléments de support (42) étant également fixés le long d'un second support apte à s'étendre verticalement dans le récipient vertical allongé (2), dit second support vertical (4B), **caractérisé en ce que** les éléments de support (42) soient également fixés le long d'un troisième support apte à s'étendre verticalement dans le récipient vertical allongé (2), dit troisième support vertical (4C), le dispositif (1) est agencé pour que le premier support vertical (4A), le second support vertical (4B), et le troisième support vertical (4C) puissent s'étendre le long de trois axes verticaux parallèles non coplanaires, et **en ce que** chaque élément de support (42) comprenne une pluralité de bagues (34, 38, 44) reliées entre elles, par exemple au moyen d'un tronçon (48) de tube et/ou un ressort dit vertical (50) apte à s'étendre verticalement, ces bagues (34, 38, 44) étant aptes à être étagées verticalement dans le récipient (2), chaque bague (34, 38, 44) supportant les éléments ralentisseurs de chute (36, 40, 46) qui sont des ressorts spiralés aptes à s'étendre horizontalement en un même niveau horizontal dans le récipient (2) et à se répartir, pour chaque bague (34, 38, 44), sur un secteur angulaire horizontal déterminé d'angle (alpha) compris entre 65° et 200°, qui est décalé angulairement pour deux bagues voisines, de façon qu'ensemble les ressorts spiralés (36, 40, 46) de cet élément de support (42) se répartissent angulairement sur au moins un secteur angulaire d'angle 360°.

3. Dispositif selon la revendication 1 ou 2, dans lequel chaque élément de support (6, 42) comprend au moins une partie rigide fixée à chacun des premier support vertical (4A), second support vertical (4B), et troisième support vertical (4C).

4. Dispositif selon l'une quelconque des revendications 1 à 3, dans lequel le récipient (2) présente une hauteur déterminée, les premier, second, et troisième support vertical (4A, 4B, 4C) sont aptes à s'étendre dans le récipient (2) en vis-à-vis sur la plus grande partie au moins de la hauteur du récipient (2), et les éléments de support (6, 42) sont aptes à être étagés verticalement sur la plus grande partie au moins de la hauteur du récipient (2).

5. Dispositif selon l'une quelconque des revendications 1 à 4, dans lequel chaque élément de support (6, 42) est fixé à chacun des premier, second, et troisième support vertical (4A, 4B, 4C) à un même niveau horizontal lorsque ces supports verticaux (4A, 4B, 4C) sont disposés verticalement dans le récipient (2).

6. Utilisation d'un dispositif selon l'une quelconque des revendications 1 à 5, pour le remplissage de grains de catalyseur dans un réacteur tubulaire de vaporéformage.

7. Utilisation d'un dispositif selon l'une quelconque des revendications 1 à 5, pour le remplissage de granulés qui sont des gélules ou des comprimés d'un médicament dans un récipient.

## Patentansprüche

1. Vorrichtung (1) zum Befüllen eines vertikalen länglichen Behälters (2) mit Granulat, umfassend Elemente (23) zur Dämpfung des fallenden Granulats, die dazu bestimmt sind, vertikal im Inneren des Behälters (2) verteilt zu werden mit Hilfe von Elementen zum Haltern (6) dieser Falldämpfungselemente (23), die entlang einer ersten Halterung befestigt sind, die dazu eingerichtet ist, sich vertikal in dem vertikalen länglichen Behälter (2) zu erstrecken, so genannte erste vertikale Halterung (4A), wobei die Halterungselemente (6) auch entlang einer zweiten Halterung befestigt sind, die dazu eingerichtet ist, sich vertikal in dem vertikalen länglichen Behälter (2) zu erstrecken, so genannte zweite vertikale Halterung (4B), wobei die Falldämpfungselemente (23), die durch jedes Halterungselement (6) gehalten werden, spiralförmige Federn sind, die jeweils dazu eingerichtet sind, sich horizontal im Wesentlichen auf einer selben horizontalen Höhe in dem Behälter (2) zu erstrecken, **dadurch gekennzeichnet, dass** die Halterungselemente (6) auch entlang einer dritten Halterung befestigt sind, die dazu eingerichtet ist, sich vertikal in dem vertikalen länglichen Behälter (2) zu erstrecken, so genannte dritte vertikale Halterung (4C), die Vorrichtung (1) so vorgesehen ist, dass die erste vertikale Halterung (4A), die zweite vertikale Halterung (4B) und die dritte vertikale Halterung (4C) sich entlang von drei parallelen, nicht koplanaren, vertikalen Achsen erstrecken können, wobei die Falldämpfungselemente (23), die durch jedes Halterungselement (6) gehaltert werden, jede dazu eingerichtet sind, sich zusammen, bei jedem Halterungselement (6), über einen bestimmten horizontalen Winkelsektor mit einem Winkel (alpha) zu verteilen, der zwischen 65° und 200° beträgt, wobei dieser Winkelsektor bei zwei benachbarten Halterungselementen winklig versetzt ist, in der Form, dass die spiralförmigen Federn (23) der Vorrichtung (1) sich winklig über mindestens einen Winkelsektor mit einem Winkel von 360° verteilen.

2. Vorrichtung (1) zum Befüllen eines vertikalen länglichen Behälters (2) mit Granulat, umfassend Elemente (36, 40, 46) zur Dämpfung des fallenden Granulats, die dazu bestimmt sind, vertikal im Inneren des Behälters (2) verteilt zu werden mit Hilfe von Elementen zum Haltern (42) dieser Falldämpfungselemente (36, 40, 46), die entlang einer ersten Halterung befestigt sind, die dazu eingerichtet ist, sich vertikal in dem vertikalen länglichen Behälter (2) zu erstrecken, so genannte erste vertikale Halterung (4A), wobei die Halterungselemente (42) auch entlang einer zweiten Halterung befestigt sind, die dazu eingerichtet ist, sich vertikal in dem vertikalen länglichen Behälter (2) zu erstrecken, so genannte zweite vertikale Halterung (4B), **dadurch gekennzeichnet, dass** die Halterungselemente (42) auch entlang einer dritten Halterung befestigt sind, die dazu eingerichtet ist, sich vertikal in dem vertikalen länglichen Behälter (2) zu erstrecken, so genannte dritte vertikale Halterung (4C), die Vorrichtung (1) so vorgesehen ist, dass die erste vertikale Halterung (4A), die zweite vertikale Halterung (4B) und die dritte vertikale Halterung (4C) sich entlang von drei parallelen, nicht koplanaren, vertikalen Achsen erstrecken können, und dass jedes Halterungselement (42) eine Mehrzahl von Ringen (34, 38, 44) umfasst, die miteinander verbunden sind, zum Beispiel mit Hilfe eines Rohrabschnitts (48) und/oder einer so genannten vertikalen Feder (50), die dazu eingerichtet ist, sich vertikal zu erstrecken, wobei diese Ringe (34, 38, 44) dazu eingerichtet sind, in dem Behälter (2) vertikal abgestuft zu sein, wobei jeder Ring (34, 38, 44) die Falldämpfungselemente (36, 40, 46) haltert, die spiralförmige Federn sind, die dazu eingerichtet sind, sich horizontal auf einer selben horizontalen Höhe in dem Behälter (2) zu erstrecken und sich, bei jedem Ring (34, 38, 44), über einen bestimmten horizontalen Winkelsektor mit einem Winkel (alpha) zu verteilen, der zwischen 65° und 200° beträgt, der bei zwei benachbarten Halterungselementen winklig versetzt ist, in der Form, dass die spiralförmigen Federn (36, 40, 46) dieses Halterungselements (42) sich winklig über mindestens einen Winkelsektor mit einem Winkel von 360° verteilen.

3. Vorrichtung nach Anspruch 1 oder 2, wobei jedes Halterungselement (6, 42) mindestens einen starren Teil umfasst, der an jeder der ersten vertikalen Halterung (4A), zweiten vertikalen Halterung (4B) und dritten vertikalen Halterung (4C) befestigt ist.

4. Vorrichtung nach einem der Ansprüche 1 bis 3, wobei der Behälter (2) eine bestimmte Höhe aufweist, die erste, zweite und dritte vertikale Halterung (4A, 4B, 4C) dazu eingerichtet sind, sich in dem Behälter (2) gegenüber über den größten Teil mindestens der Höhe des Behälters (2) zu erstrecken, und die Halterungselemente (6, 42) dazu eingerichtet sind, über den größten Teil mindestens der Höhe des Behälters (2) vertikal abgestuft zu sein.

5. Vorrichtung nach einem der Ansprüche 1 bis 4, wobei jedes Halterungselement (6, 42) an jeder der ersten, zweiten und dritten vertikalen Halterung (4A, 4B, 4C) auf einer selben horizontalen Höhe befestigt ist, wenn diese vertikalen Halterungen (4A, 4B, 4C) in dem Behälter (2) vertikal angeordnet sind.

6. Verwendung einer Vorrichtung nach einem der Ansprüche 1 bis 5 zum Befüllen eines rohrförmigen Dampfreformierungsreaktors mit Katalysatorkörnern.

7. Verwendung einer Vorrichtung nach einem der Ansprüche 1 bis 5 zum Befüllen eines Behälters mit Granulat, das Gelatinekapseln oder Tabletten eines Arzneimittels sind.

## Claims

1. Device (1) for filling granules in an elongated vertical container (2), comprising elements (23) for slowing the fall of the granules, intended to be distributed vertically inside the container (2) by means of support elements (6) for supporting these fall-slowing elements (23), fixed along a first support adapted for extending vertically in the elongated vertical container (2), called the first vertical support (4A), the support elements (6) being also fixed along a second support adapted for extending vertically in the elongate vertical container (2), called the second vertical support (4B), the fall-slowing elements (23) supported by each support element (6) being spiral springs, each adapted for extending horizontally substantially at the same horizontal level in the container (2), **characterized in that** the support elements (6) are also fixed along a third support adapted for extending vertically in the elongate vertical container (2), called the third vertical support (4C), the device (1) is arranged such that the first vertical support (4A), the second vertical support (4B) and the third vertical support (4C) can extend along three non-coplanar parallel vertical axes, the fall-slowing elements (23) supported by each support member (6) being each adapted to be distributed together, for each support member (6), on a determined horizontal angular sector with an angle (alpha) of between 65° and 200°, said angular sector being offset angularly for two adjacent support elements such that the spiral springs (23) of the device (1) are together angularly distributed over at least one angular sector of 360°.

2. Device (1) for filling granules in an elongate vertical container (2) comprising elements (36, 40, 46) for slowing the fall of the granules, intended to be distributed vertically inside the container (2) by means of support elements (42) for supporting these fall-slowing elements (36, 40, 46), fixed along a first support adapted for extending vertically in the elongated vertical container (2), called the first vertical support (4A), the support elements (42) being also fixed along a second support adapted for extending vertically in the elongated vertical container (2), called the second vertical support (4B), **characterized in that** the support elements (42) are also fixed along a third support adapted for extending vertically in the elongate vertical container (2), called the third vertical support (4C), the device (1) is arranged in such a way that the first vertical support (4A), the second vertical support (4B) and the third vertical support (4C) can extend along three non-coplanar parallel vertical axes, and **in that** each support member (42) comprises a plurality of interconnected rings (34, 38, 44), for example interconnected by means of a tube section (48) and/or a spring (50), called vertical spring, adapted for vertically extending, said rings being adapted for being vertically stepped in the container (2), each ring (34, 38, 44) supporting the fall-slowing elements (36, 40, 46), which are spiral springs adapted to extend horizontally in the same horizontal level in the container (2) and to be distributed, for each ring (34, 38, 44), on a determined horizontal angular sector with an angle (alpha) of between 65° and 200°, which is offset angularly for two adjacent rings, such that the spiral springs (36, 40, 46) of this support element (42) are together angularly distributed over at least one angular sector of 360°.

3. Device according to claim 1 or 2, wherein each support element (6, 42) comprises at least one rigid part fixed to each of the first vertical support (4A), second vertical support (4B) and third vertical support (4C).

4. Device according to anyone of claims 1-3, wherein the container (2) has a determined height, the first, second and third vertical supports (4A, 4B, 4C) are adapted for extending in the container (2) facing each other over the greater part of the height of the container (2), and the support elements (6, 42) are adapted for being vertically stepped over at least the greater part of the height of the container (2).

5. Device according to anyone of claims 1-4, wherein each support element (6, 42) is fixed to each of the first, second and third vertical support (4A, 4B, 4C) at a same horizontal level when these vertical supports (4A, 4B, 4C) are arranged vertically in the container (2).

6. Use of a device according to anyone of claims 1 to 5 for filling catalyst grains in a vaporeforming tubular reactor.

7. Use of a device according to any one of claims 1 to 5 for filling granules in a container which are capsules or tablets of a medicament.
